# FASCICULE DE BREVET EUROPEEN

(11) **EP 3 131 729 B1**
(45) Date de publication et mention de la délivrance du brevet: **28.11.2018**
(21) Numéro de dépôt: 14814972.7
(22) Date de dépôt: 27.11.2014
(51) Int. Cl.: B29C 45/12, B29C 33/20, B29C 43/54, B29C 43/58

(54) **MOULE EN TANDEM POUR LA RÉALISATION DE PIÈCES INJECTÉES EN MATIÈRE SYNTHÉTIQUE**
TANDEMWERKZEUG ZUM HERSTELLEN SPRITZGEGOSSENER KUNSTSTOFFTEILE
TANDEMMOULD FOR PRODUCTION OF INJECTIONMOULDED PARTS MADE FROM PLASTIC

(30) Priorité: 15.04.2014 FR 1453354
(43) Date de publication de la demande: 22.02.2017
(73) Titulaire: Plastisud, 31400 Toulouse (FR)
(72) Inventeur: BUZZO TITELLA, Jacques, F-11400 Castelnaudary (FR)
(74) Mandataire: Cabinet Plasseraud
(86) Numéro de dépôt international: PCT/FR2014/053059
(87) Numéro de publication internationale: WO 2015/158965

(56) Documents cités:
- EP-A1- 0 116 132
- WO-A1-89/02357
- DE-U1- 7 700 625
- FR-A1- 2 295 832
- GB-A- 2 158 389
- US-A- 5 811 135
- US-A1- 2008 265 465

## Description

La présente invention concerne un moule en tandem pour la réalisation de pièces injectées en matière synthétique.

Les procédés de moulage de pièces en matière synthétique par injection sont connus de l'homme du métier et utilisés depuis de nombreuses années. Dans un tel procédé, un moule réalisé en deux parties définit une cavité de forme prédéterminée dans laquelle on vient injecter de la matière synthétique en fusion. La matière synthétique est refroidie dans le moule, qui est alors ouvert permettant d'accéder à la pièce ainsi réalisée.

Pour accélérer les cadences de moulage, il est connu aussi de réaliser un moule en tandem. Le moule est alors réalisé en trois parties : une première partie fixe, une deuxième partie mobile et une troisième partie dite flottante disposée entre la première partie fixe et la deuxième partie mobile. Des empreintes sont réalisées dans les faces de ces parties qui sont en vis-à-vis pour réaliser ainsi des cavités entre la première partie fixe et la troisième partie flottante, d'une part, et entre la deuxième partie mobile et la troisième partie flottante, d'autre part. On réalise de la sorte un moule double, ou bi-étages : lorsque le moule est fermé, on vient remplir toutes les cavités ainsi définies et en ouvrant le moule, toutes les pièces peuvent être extraites simultanément. La cadence de production peut ainsi être multipliée environ par deux.

Il est également connu un procédé de moulage particulier dans lequel de la matière synthétique en fusion est injectée dans les cavités du moule avant que le moule ne soit entièrement fermé. Ce procédé est connu aussi sous le nom d'injection compression car lors de la fermeture complète du moule, la matière injectée se trouvant déjà dans la cavité est comprimée et vient alors diffuser dans la cavité.

Le procédé d'injection compression permet d'optimiser les procédés d'injection car il permet, d'une part, de faciliter l'injection et ainsi d'augmenter les cadences de production et, d'autre part, d'augmenter les longueurs d'écoulement et ainsi d'optimiser les quantités de matière synthétique injectées.

Le document US2008/265465 montre une machine d'injection avec deux moules qui utilise des techniques d'injection compression.

Le document EP0116132 révèle une presse d'injection possédant pour deux moules un bloc d'injection commun avec dispositif d'alimentation et analogue pour la matière à injecter.

Le document FR2295832 divulgue une machine d'injection de matière plastique dans deux moules.

Le document DE7700625U1 décrit quant à lui une machine pour le moulage de pièces en matière synthétique présentant une durée de durcissement longue, en particulier pour la réalisation de structures en mousse.

Le document WO89/02357 concerne une presse de formage permettant le moulage par injection, conçue sans les traverses classiques pour relier les plateaux porte-moule.

Enfin, le document GB2158389 décrit un dispositif de fermeture de moule pour machines de traitement de matières synthétiques.

Toutefois, il n'est pas connu de faire fonctionner un moule en tandem avec un procédé d'injection compression. Des difficultés apparaissent en effet.

La mise en oeuvre d'un procédé d'injection compression dans un moule classique en deux parties demande une bonne maitrise de la position des parties du moule lors de la fermeture de celui-ci et une bonne synchronisation de l'opération de fermeture du moule et de l'injection de matière synthétique dans les cavités définies dans le moule. Dans un moule bi-étages en trois parties, une fixe, une mobile et une flottante, il faut lors de la fermeture du moule assurer à la fois une bonne maitrise de la position relative de la partie fixe avec la partie flottante (premier plan de joint) et de la partie mobile avec la partie flottante (second plan de joint). Les diverses contraintes mécaniques exercées sur la partie flottante n'étant pas symétriques, il est difficile d'assurer un bon positionnement de cette partie flottante tant par rapport à la partie fixe que par rapport à la partie mobile.

La présente invention a alors pour but de fournir des moyens permettant de réaliser des pièces en matière synthétique par injection compression dans un moule en tandem, appelé aussi moule bi-étages, c'est-à-dire un moule présentant deux plans de joint avec au moins une cavité au niveau de chaque plan de joint.

Un but de l'invention est ainsi de fournir un système mécanique précis permettant dans un moule en trois parties de réaliser un positionnement précis des trois parties du moule lors de la fermeture de celui-ci afin de permettre un contrôle précis du volume de chaque cavité.

À cet effet, il est proposé un moule en tandem pour la réalisation de pièces injectées en matière synthétique comportant une première partie, une deuxième partie et une troisième partie, ainsi que des moyens de guidage permettant un déplacement relatif de la première partie par rapport à la troisième partie et un déplacement relatif entre la deuxième partie et la troisième partie, un premier plan de joint étant défini entre la première partie et la troisième partie et un second plan de joint étant défini entre la deuxième partie et la troisième partie, le moule pouvant prendre, d'une part, une position dite ouverte dans laquelle le premier plan de joint et le second plan de joint sont ouverts, c'est-à-dire que les parties du moule correspondantes sont espacées l'une de l'autre, et, d'autre part, une position dite fermée dans laquelle le premier plan de joint et le second plan de joint sont fermés, c'est-à-dire que les parties du moule correspondantes viennent au contact l'une de l'autre.

Selon l'invention, ce moule comporte pour chaque plan de joint au moins une butée mécanique mobile entre une première position, ou position active, dans laquelle ladite butée empêche le moule d'atteindre sa position fermée en définissant un espacement prédéterminé pour chaque plan de joint entre les parties du moule correspondantes et une seconde position, ou position escamotée, dans laquelle le moule peut atteindre sa position fermée.

Les moyens proposés permettent dans un moule bi-étages (appelé aussi moule en tandem) de garantir une position relative très précise entre les parties du moule grâce aux butées. Ce positionnement précis est utile pour la mise en oeuvre d'un procédé d'injection compression. L'injection de la matière synthétique peut alors être réalisée en fonction de la période pendant laquelle le moule est entrouvert dans la position définie par les butées.

Une première forme de réalisation prévoit qu'une butée est formée par un vérin disposé entre deux parties du moule. Dans cette forme de réalisation, chaque plan de joint comporte par exemple au moins deux vérins formant butée pour permettre de garantir un espacement suffisamment constant entre deux parties de moule en vis-à-vis.

Selon une autre forme de réalisation, une butée est formée par une vis coopérant avec un écrou, des moyens motorisés étant prévus pour permettre une translation relative entre la vis et l'écrou. Une variante avantageuse de cette forme de réalisation, permettant une synchronisation entre les deux plans de joint, prévoit que le moule comporte :
- une première vis en prise dans un premier écrou entre la première partie du moule et la troisième partie du moule,
- une seconde vis en prise dans un second écrou entre la deuxième partie du moule et la troisième partie du moule, la seconde vis étant dans le prolongement de la première et présentant un filetage inversé par rapport à celui de la première vis,
le premier écrou et le second écrou étant solidaires et entrainés en rotation par un même moteur.

Une troisième forme de réalisation propose qu'une butée se présente sous la forme d'un coin mobile, que la butée est disposée face à un coin fixe complémentaire, la butée et le coin fixe formant une cale présentant deux faces parallèles plus ou moins espacées selon la position relative du coin mobile par rapport au coin fixe. Ici, à chaque coin mobile peut être associé un vérin disposé transversalement par rapport au sens de déplacement des parties mobiles du moule.

Une autre variante de réalisation prévoit que la première partie, la deuxième partie et la troisième partie du moule portent des empilages de moule, chaque empilage comportant un noyau monté sur une partie et une empreinte montée sur une partie face à la partie portant le noyau correspondant, et qu'au moins une butée mécanique est disposée à chaque fois au niveau d'un empilage de moule entre une zone périphérique de l'empreinte et une zone périphérique du noyau correspondant.

Les divers types de butées évoquées ci-dessus peuvent aussi être utilisés dans cette dernière variante de réalisation.

On pourrait prévoir des butées de types différents au sein d'un même moule mais il ne s'agit a priori pas d'une forme de réalisation préférée. Elle est toutefois bien entendu techniquement envisageable.

La présente invention concerne également une machine de moulage par injection, caractérisée en ce qu'elle comporte un moule tel que décrit ci-dessus.

Des détails et avantages de la présente invention apparaitront mieux de la description qui suit, faite en référence au dessin schématique annexé sur lequel :
La figure 1 est une vue en perspective d'un moule en tandem de l'art antérieur,
La figure 2 est une vue schématique en élévation et partiellement en coupe, d'une première forme de réalisation d'un moule en tandem destiné à réaliser des pièces en matière synthétique par injection compression,
La figure 3 est une vue similaire à la figure 2 illustrant une première variante de réalisation,
La figure 4 est une vue similaire aux vues des figures 2 et 3 pour une seconde variante de réalisation, et
La figure 5 est une vue similaire aux vues des figures 2 à 4 pour une troisième variante de réalisation.

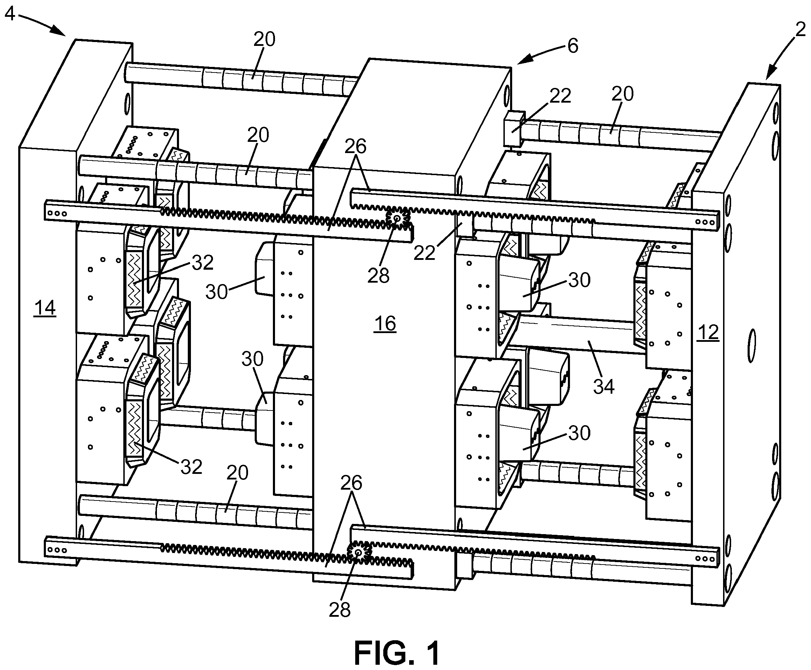

La figure 1 illustre schématiquement un moule en tandem, appelé également moule bi-étages. Comme il apparaît sur cette figure, ce moule présente trois parties reliées entre elles par des moyens de guidage et entrainées par un mécanisme décrit plus loin.

La structure illustrée sur la figure 1 est donnée à titre d'exemple illustratif non limitatif d'un moule connu pouvant être utilisé pour la mise en oeuvre de l'invention.

Le moule illustré comporte ainsi une première partie fixe 2, une deuxième partie mobile 4 et une troisième partie flottante 6, disposée entre la première partie fixe 2 et la deuxième partie mobile 4.

Chacune de ces trois parties présente un support 12, 14, 16 de forme parallélépipédique rectangle, chaque support présentant sensiblement la même largeur et la même hauteur mais une épaisseur différente. Les trois supports sont alignés et on appelle face principale d'un support une face de ce support disposée en vis-à-vis d'un autre support (ou d'une autre partie de moule).

Des colonnes de guidage 20 relient à chaque fois une partie de moule à la partie de moule en vis-à-vis. Chaque colonne de guidage 20 s'étend perpendiculairement à une face principale d'un support. On a ainsi quatre colonnes de guidage 20 disposées entre la première partie fixe 2 de moule et la troisième partie flottante 6 de moule et quatre colonnes de guidage entre la deuxième partie mobile 4 de moule et la troisième partie flottante 6 de moule. Ces colonnes de guidage 20 sont fixes par rapport à la première partie fixe 2 ou la deuxième partie mobile 4 et viennent coulisser chacune dans une bague 22 correspondante fixée sur la troisième partie flottante 6.

Un tel moule est destiné à être monté sur une presse non représentée. La première partie fixe 2 de moule est alors solidaire d'une partie fixe de la presse tandis que la deuxième partie mobile 4 de moule est solidarisée à la partie mobile de la presse. Pour réaliser le déplacement de la troisième partie flottante 6, des crémaillères 26 et des pignons 28 sont prévus. Deux crémaillères 26 sont disposées parallèlement aux colonnes de guidage 20 (qui sont parallèles à la direction de déplacement définie par la presse sur laquelle le moule est monté) et sont fixées sur la première partie fixe 2. Chacune de ces crémaillères 26 engrène avec un pignon 28 monté pivotant sur la troisième partie flottante 6. Chaque pignon 28 engrène à son tour aussi avec une autre crémaillère 26, parallèle aux crémaillères 26 fixées sur la première partie fixe 2, mais fixées sur la deuxième partie mobile 4. Il apparaît ainsi que l'entraînement translation par presse de la deuxième partie mobile 4 entraîne en rotation chaque pignon 28 et provoque à la fois le déplacement relatif de la troisième partie flottante 6 par rapport à la première partie fixe 2 à une vitesse de moitié de celle de la deuxième partie mobile 4 par rapport à la première partie fixe 2.

De manière classique, pour réaliser une pièce moulée, on utilise un ensemble appelé aussi empilage de moule, ledit ensemble comportant une première pièce avec un noyau 30 et une seconde pièce avec une empreinte 32. Dans la forme de réalisation illustrée, chaque face principale du troisième support 16 de la troisième partie flottante 6 porte quatre premières pièces avec donc au total quatre noyaux 30 tandis que la face principale du premier support 12 et la face du deuxième support 14 portent chacune quatre secondes pièces avec donc au total quatre empreintes 32 sur le premier support 12 et quatre empreintes 32 sur le deuxième support.

Le moule sur la figure 1 est illustré en position ouverte, la troisième partie flottante 6 et la première partie fixe 2 étant écartées l'une de l'autre de même que la troisième partie flottante 6 et la deuxième partie mobile 4.

Lorsque les moyens d'entraînement (comportant les crémaillères 26 coopérant avec les pignons 28) viennent fermer le moule, une zone périphérique de chaque noyau 30 vient à chaque fois au contact d'une zone périphérique de l'empreinte 32 du même empilage de moule. La surface au contact autour d'un noyau 30 et d'une empreinte 32 correspondante est appelée plan de joint. Le plus souvent cette surface est en effet plane et correspond à un même plan pour tous les noyaux 30 montés sur une même face principale, ledit plan étant en outre parallèle à cette face principale. Comme indiqué, il faut entendre par plan de joint une surface de contact entre la première pièce d'un empilage de moule portant un noyau et la seconde pièce de cet empilage de moule portant son empreinte même si cette surface n'est pas plane.

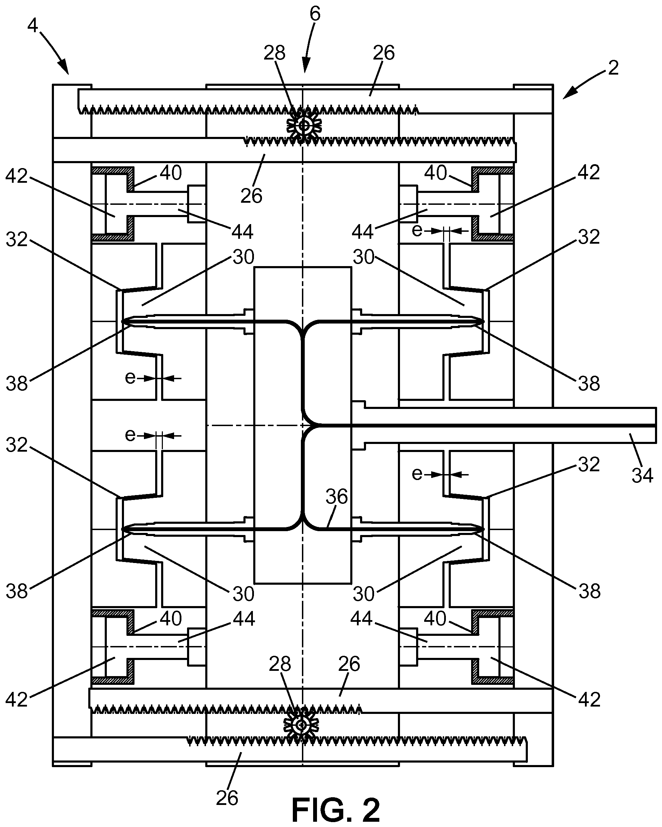

De façon connue de l'homme du métier, il reste dans la position fermée du moule entre chaque noyau 30 et chaque empreinte 32 correspondante une cavité dont la forme correspond à la forme des pièces que l'on souhaite mouler. Un tube d'injection 34 est prévu pour amener de la matière synthétique en fusion dans chaque cavité par l'intermédiaire d'un réseau illustré très schématiquement sur les figures 2 à 4.

Sur la figure 2, on reconnaît de manière schématique la première partie fixe 2, la deuxième partie mobile 4, la troisième partie flottante 6 et deux noyaux 30 sur chaque face principale du troisième support 16 coopérant avec deux empreintes 32 correspondantes montées sur le premier support 12 et le deuxième support 14. Les crémaillères 26 et les pignons 28 sont également illustrés. Sur cette figure 2, les pièces des empilages portant les noyaux 30 ne sont pas au contact des pièces des empilages portant les empreintes 32 et un jeu e subsiste à chaque fois. Les pièces des empilages étant proches les unes des autres, on imagine sans difficultés les plans de joint du moule illustré. Une ligne 36 illustre schématiquement un parcours pour de la matière synthétique arrivant par le tube d'injection 34 pour alimenter les cavités définies par les noyaux 30 et les empreintes 32 correspondantes à travers des injecteurs 38.

On remarque sur la figure 2 également la présence de quatre vérins 40. Deux vérins 40 sont disposés entre la face principale du premier support 12 et une face principale du troisième support 16 et deux autres vérins 40 sont disposés entre la face principale du deuxième support 14 et une face principale du troisième support 16.

Ces vérins 40 forment des butées qui ont pour but de limiter la course de la deuxième partie mobile 4 et de la troisième partie flottante 6 lors d'un mouvement de fermeture du moule et d'empêcher, temporairement, que les pièces des empilages portant les noyaux 30 viennent au contact des pièces de empilages portant les empreintes 32.

Dans la forme de réalisation illustrée sur la figure 2, une chambre de vérin est fixée à chaque fois sur la face principale du premier support 12 ou du deuxième support 14. Une tête de piston 42 coulisse dans la chambre de vérin entre deux positions extrêmes. Une tige de piston 44 associée à la tête de piston 42 fait saillie hors de la chambre de vérin et forme une butée qui vient coopérer avec une face principale du troisième support 16, empêchant d'une part la fermeture complète du moule et garantissant d'autre part le jeu e au niveau de chaque plan de joint.

Grâce à cette structure, il est ainsi possible d'utiliser le moule illustré pour réaliser des pièces en matière synthétique par un procédé d'injection compression. En effet, lors d'une phase de fermeture du moule, les vérins 40 sont commandés de manière à ce que leurs tiges de piston 42 soient en position sortie. La troisième partie flottante 6 vient alors buter sur les vérins 40 fixés sur la première partie fixe 2 et la deuxième partie mobile 4 vient buter sur les vérins 40 fixés sur la deuxième partie mobile 4 en laissant à chaque fois un jeu e au niveau de chaque plan de joint. Il suffit d'avoir une pression suffisante dans les chambres des vérins 40 pour pouvoir garantir le jeu e au niveau de chaque plan de joint. À ce moment-là, de la matière synthétique en fusion peut être injectée. Les tiges de piston 44 sont alors escamotées libérant le mouvement de fermeture du moule qui peut alors être opéré. Le moule est alors verrouillé assurant ainsi la compression de la matière synthétique injectée dans les cavités.

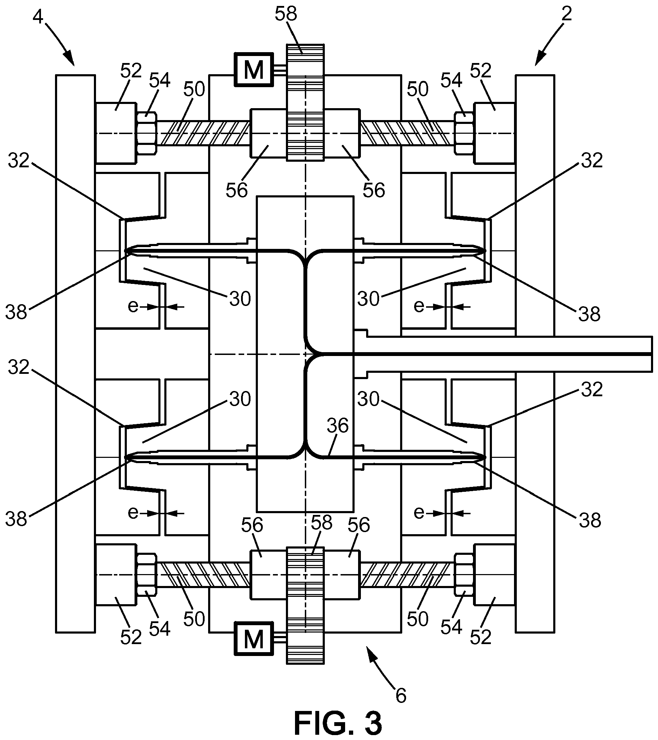

La figure 3 illustre une variante de réalisation qui peut fonctionner selon le même procédé que celui qui vient d'être décrit mais les butées sont réalisées avec des moyens différents.

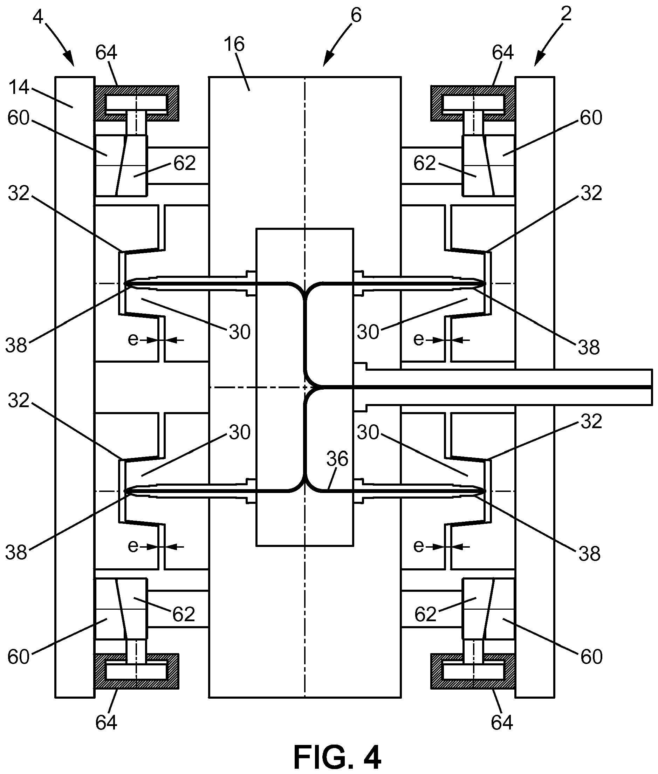

Sur la figure 3 et sur la figure 4, les crémaillères 26 et les pignons 28 n'ont pas été représentés pour ne pas surcharger la figure.

Dans cette forme de réalisation, pour limiter la course entre, d'une part, la première partie fixe 2 et la troisième partie flottante 6 et, d'autre part, la deuxième partie mobile 4 et la troisième partie flottante 6 des vis 50 montées sur la troisième partie flottante 6 viennent coopérer avec un butoir 52 solidaire de la première partie fixe 2 ou de la deuxième partie mobile 4. Chaque vis 50, sur la figure 3, comporte une tige terminée par une tête 54 du côté du butoir 52. En outre, chaque vis 50 est bloquée en rotation par rapport à la troisième partie flottante 6. Une partie saillante de la vis 50 peut par exemple être en prise dans une rainure réalisée sur la troisième partie flottante 6 ou bien au contraire, la troisième partie flottante 6 peut présenter une partie saillante venant en prise dans une rainure longitudinale de la vis 50. L'extrémité de chaque vis 50 opposée à la tête 54 correspondante est en prise dans une douille 56 taraudée. Chaque douille 56 est montée tournante.

Lors de la fermeture du moule, les têtes 54 de chaque vis 50 viennent en butée contre un butoir 52. La position de la vis 50 dans sa douille est telle qu'un jeu e subsiste entre les parties de moule concernées. Lorsque la douille 56 est entrainée en rotation (dans le bon sens), la vis 50 pénètre dans la douille 56 et permet ainsi à la première partie fixe 2 ou à la deuxième partie mobile 4 de se rapprocher de la troisième partie flottante 6.

La figure 3 illustre une forme de réalisation préférée dans laquelle il est prévu que chaque vis 50 en vis-à-vis d'un butoir 52 solidaire de la première partie fixe 2 est aligné avec une vis 50 en vis-à-vis d'un butoir 52 solidaire de la troisième partie flottante 6. Les deux douilles 56 correspondantes ne forment qu'une seule pièce tubulaire taraudée à l'intérieur et présentant une denture extérieure 58. Un moteur M est monté sur la troisième partie flottante 6. Il présente un arbre de sortie avec un pignon qui vient entraîner la denture extérieure 58. Dans cette forme de réalisation, il faut prévoir que deux vis 50 alignées présentent des pas de vis inversés. Ainsi la rotation des deux douilles 56 conduira à un rapprochement ou à un éloignement simultanés des vis 50.

La figure 4 illustre une troisième forme de réalisation pour les butées disposées entre les parties de moule. Ici, une cale avec deux faces parallèles aux faces principales est prévue. Cette cale est formée à chaque fois par un coin fixe 60 et par un coin mobile 62. Le coin mobile 62 est commandé par un vérin 64 qui permet de le déplacer selon une direction parallèle aux faces principales. Il apparaît ainsi clairement à l'homme du métier que l'épaisseur de la cale formée par le coin fixe 60 et le coin mobile 62 est variable. Cette épaisseur est ajustée de telle manière à empêcher la fermeture du moule et à assurer un jeu e au niveau du plan de joint dans un cas et à permettre la fermeture complète du moule et son verrouillage dans un autre cas.

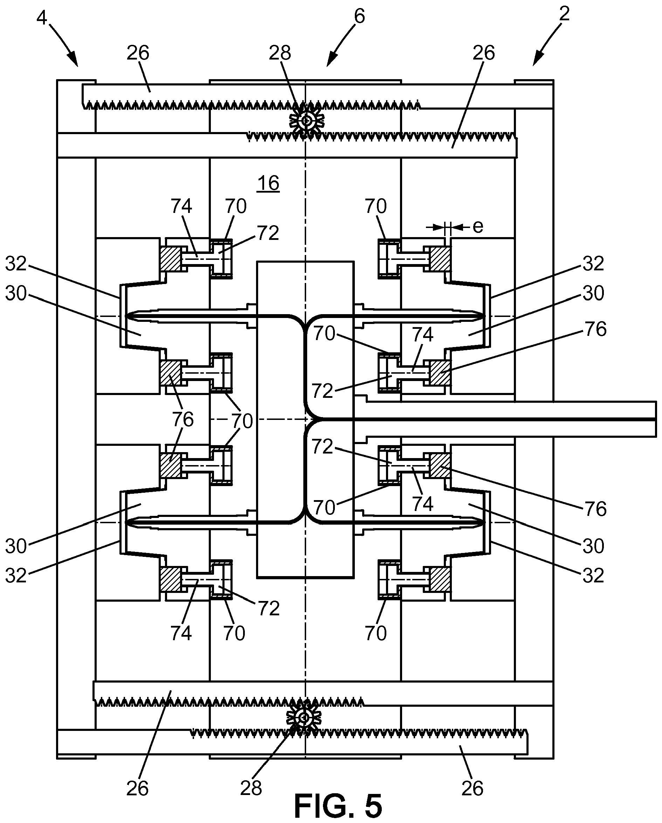

La figure 5 illustre une forme de réalisation dans laquelle il est prévu de disposer une butée mécanique au niveau de chaque empilage de moule. Dans cette forme de réalisation il est prévu d'intégrer deux vérins 70 à chaque pièce d'un empilage de moule portant un noyau 30. Les vérins 70 sont diamétralement opposés par rapport au noyau 30 de la pièce correspondante.

Pour chaque vérin 70, une chambre de vérin est intégrée ici au support 16 de la troisième partie flottante 6. Elle pourrait aussi éventuellement trouver sa place dans la pièce de l'empilage portant le noyau 30 correspondant. Une tête de piston 72 coulisse dans la chambre de vérin entre deux positions extrêmes. Une tige de piston 74 associée à la tête de piston 72 fait saillie hors de la chambre de vérin en direction de l'autre pièce de l'empilage, celle portant l'empreinte 32. Cette autre pièce porte une pièce annulaire 76 (non représentée sur les autres figures) qui est destinée à fermer la cavité entre le noyau 30 et l'empreinte 32. Le vérin 70 est dimensionné de telle sorte que lorsque la tige de piston 74 est dans sa position entièrement sortie (illustrée sur la figure 5), le jeu e subsiste au niveau du plan de joint. La tige de piston 74 réalise ainsi la butée mécanique qui empêche la fermeture du moule.

Ces diverses formes de réalisation permettent l'utilisation d'un moule en tandem, ou moule bi-étages, pour la mise en oeuvre d'un procédé d'injection compression. La structure proposée ici permet lors de la fermeture du moule de définir un espacement très précis entre les noyaux et les empreintes puis d'autoriser une fermeture complète du moule. Une injection de matière synthétique peut ainsi être réalisée dans des conditions prédéterminées d'ouverture (ou d'"entre-ouverture") du moule puis la matière injectée peut être comprimée conformément aux procédés d'injection compression connus.

La structure proposée présente l'avantage de pouvoir être utilisée sur divers types de moules en tandem. Il apparaît en effet que cette structure peut par exemple être utilisée sur un moule dont les différentes parties ne seraient pas reliées par un système à crémaillères mais par d'autres moyens de liaison (un moule tel par exemple celui divulgué par le document EP-1 784 295).

Dans les exemples de réalisation donnés, les butées sont disposées entre les faces principales des supports des parties du moule. On pourrait prévoir de disposer une butée à un autre niveau d'une partie de moule. Dans la structure décrite et illustrée sur la figure 1, on pourrait prévoir d'agir par exemple au niveau des crémaillères ou d'autres éléments solidaires des diverses parties du moule. Le nombre de butées illustrées et décrites dépend bien entendu de la taille et de la géométrie du moule. L'homme du métier adaptera le nombre de butées en fonction notamment de la place disponible, du prix de revient et des contraintes techniques définissant les tolérances pour le jeu au niveau des plans de joint.

La présente invention ne se limite pas aux formes de réalisation préférées décrites ci-dessus à titre d'exemples non limitatifs. Elle concerne également les variantes de réalisation à la portée de l'homme du métier dans le cadre des revendications ci-après.

## Revendications

1. Moule en tandem pour la réalisation de pièces injectées en matière synthétique comportant une première partie (2), une deuxième partie (4) et une troisième partie (6), ainsi que des moyens de guidage (20, 22, 26, 28) permettant un déplacement relatif de la première partie (2) par rapport à la troisième partie (6) et un déplacement relatif entre la deuxième partie (4) et la troisième partie (6), un premier plan de joint étant défini entre la première partie (2) et la troisième partie (6) et un second plan de joint étant défini entre la deuxième partie (4) et la troisième partie (6), le moule pouvant prendre, d'une part, une position dite ouverte dans laquelle le premier plan de joint et le second plan de joint sont ouverts, c'est-à-dire que les parties du moule correspondantes sont espacées l'une de l'autre, et, d'autre part, une position dite fermée dans laquelle le premier plan de joint et le second plan de joint sont fermés, c'est-à-dire que les parties du moule correspondantes viennent au contact l'une de l'autre,
**caractérisé en ce qu'**il comporte pour chaque plan de joint au moins une butée mécanique (44 ; 50 ; 62) mobile entre une première position, ou position active, dans laquelle ladite butée empêche le moule d'atteindre sa position fermée en définissant un espacement prédéterminé pour chaque plan de joint entre les parties du moule correspondantes et une seconde position, ou position escamotée, dans laquelle le moule peut atteindre sa position fermée.

2. Moule selon la revendication 1, **caractérisé en ce qu'**une butée est formée par un vérin (40) disposé entre deux parties du moule.

3. Moule selon la revendication 2, **caractérisé en ce que** chaque plan de joint comporte au moins deux vérins (40) formant butée.

4. Moule selon la revendication 1, **caractérisé en ce qu'**une butée est formée par une vis (50) coopérant avec un écrou (56), des moyens motorisés étant prévus pour permettre une translation relative entre la vis (50) et l'écrou (56).

5. Moule selon la revendication 4, **caractérisé en ce qu'**il comporte :
- une première vis (50) en prise dans un premier écrou (56) entre la première partie (2) du moule et la troisième partie (6) du moule,
- une seconde vis (50) en prise dans un second écrou (56) entre la deuxième partie (4) du moule et la troisième partie (6) du moule, la seconde vis (50) étant dans le prolongement de la première (50) et présentant un filetage inversé par rapport à celui de la première vis (50),
le premier écrou (56) et le second écrou (56) étant solidaires et entrainés en rotation par un même moteur (M).

6. Moule selon la revendication 1, **caractérisé en ce qu'**une butée se présente sous la forme d'un coin mobile (62), **en ce que** la butée est disposée face à un coin fixe (60) complémentaire, la butée (62) et le coin fixe (60) formant une cale présentant deux faces parallèles plus ou moins espacées selon la position relative du coin mobile (62) par rapport au coin fixe (60).

7. Moule selon la revendication 6, **caractérisé en ce qu'**à chaque coin mobile (62) est associé un vérin (64) disposé transversalement par rapport au sens de déplacement des parties mobiles (4, 6) du moule.

8. Moule selon la revendication 1, **caractérisé en ce que** la première partie (2), la deuxième partie (4) et la troisième partie (6) portent des empilages de moule, chaque empilage comportant un noyau (30) monté sur une partie (6) et une empreinte (32) montée sur une partie (2, 4) face à la partie (6) portant le noyau (30) correspondant, et **en ce qu'**au moins une butée mécanique est disposée à chaque fois au niveau d'un empilage de moule entre une zone périphérique de l'empreinte (32) et une zone périphérique du noyau (30) correspondant.

9. Machine de moulage par injection, **caractérisée en ce qu'**elle comporte un moule selon l'une des revendications 1 à 8.

## Patentansprüche

1. Tandem-Form zum Herstellen von Spritzgussteilen aus Kunststoff, umfassend einen ersten Teil (2), einen zweiten Teil (4) und einen dritten Teil (6) sowie Führungsmittel (20, 22, 26, 28), die eine relative Verschiebung des ersten Teils (2) in Bezug auf den dritten Teil (6) und eine relative Verschiebung zwischen dem zweiten Teil (4) und dem dritten Teil (6) ermöglichen, wobei eine erste Verbindungsebene zwischen dem ersten Teil (2) und dem dritten Teil (6) definiert ist und eine zweite Verbindungsebene zwischen dem zweiten Teil (4) und dem dritten Teil (6) definiert ist, wobei die Form Folgendes einnehmen kann: einerseits eine so genannte offene Position, in der die erste Verbindungsebene und die zweite Verbindungsebene offen sind, d.h. dass die entsprechenden Teile der Form voneinander beabstandet sind, und andererseits eine so genannte geschlossene Position, in der die erste Verbindungsebene und die zweite Verbindungsebene geschlossen sind, d.h. dass die entsprechenden Teile der Form miteinander in Kontakt gelangen,
**dadurch gekennzeichnet, dass** sie für jede Verbindungsebene wenigstens einen mechanischen Anschlag (44; 50; 62) umfasst, der beweglich ist zwischen einer ersten Position oder aktiven Position, in welcher der Anschlag die Form daran hindert, ihre geschlossene Position zu erreichen, indem ein vorbestimmter Abstand für jede Verbindungsebene zwischen den entsprechenden Teilen der Form definiert wird, und einer zweiten Position oder versenkten Position, in der die Form ihre geschlossene Position erreichen kann.

2. Form nach Anspruch 1, **dadurch gekennzeichnet, dass** ein Anschlag durch einen Zylinder (40) gebildet wird, der zwischen zwei Teilen der Form angeordnet ist.

3. Form nach Anspruch 2, **dadurch gekennzeichnet, dass** jede Verbindungsebene wenigstens zwei Zylinder (40) umfasst, die einen Anschlag bilden.

4. Form nach Anspruch 1, **dadurch gekennzeichnet, dass** ein Anschlag durch eine Schraube (50) gebildet wird, der mit einer Mutter (56) zusammenwirkt, wobei motorisierte Mittel vorgesehen sind, um eine relative Translationsbewegung zwischen der Schraube (50) und der Mutter (56) zu ermöglichen.

5. Form nach Anspruch 4, **dadurch gekennzeichnet, dass** sie Folgendes umfasst:
- eine erste Schraube (50) in Eingriff in einer ersten Mutter (56) zwischen dem ersten Teil (2) der Form und dem dritten Teil (6) der Form,
- eine zweite Schraube (50) in Eingriff in einer zweiten Mutter (56) zwischen dem zweiten Teil (4) der Form und dem dritten Teil (6) der Form, wobei sich die zweite Schraube (50) in der Verlängerung der ersten (50) befindet und ein Gewinde aufweist, das in Bezug auf jenes der ersten Schraube (50) umgekehrt ist,
wobei die erste Mutter (56) und die zweite Mutter (56) fest miteinander verbunden sind und durch denselben Motor (M) drehangetrieben werden.

6. Form nach Anspruch 1, **dadurch gekennzeichnet, dass** ein Anschlag die Form eines beweglichen Keils (62) aufweist, dass der Anschlag gegenüber von einem komplementären feststehenden Keil (60) angeordnet ist, wobei der Anschlag (62) und der feststehende Keil (60) eine Verkeilung bilden, die zwei parallele Seiten aufweist, die je nach der relativen Position des beweglichen Keils (62) in Bezug auf den feststehenden Keil (60) mehr oder weniger weit voneinander beabstandet sind.

7. Form nach Anspruch 6, **dadurch gekennzeichnet, dass** jedem beweglichen Keil (62) ein Zylinder (64) zugeordnet ist, der quer in Bezug auf die Bewegungsrichtung der beweglichen Teile (4, 6) der Form angeordnet ist.

8. Form nach Anspruch 1, **dadurch gekennzeichnet, dass** der erste Teil (2), der zweite Teil (4) und der dritte Teil (6) Formstapel tragen, wobei jeder Stapel Folgendes umfasst: einen Kern (30), der auf einem Teil (6) montiert ist, und eine Prägung (32), die auf einem Teil (2, 4) montiert ist, der dem Teil (6) gegenüberliegt, der den entsprechenden Kern (30) trägt, und dass wenigstens ein mechanischer Anschlag jedes Mal in der Höhe eines Formstapels zwischen einem Randbereich der Prägung (32) und einem Randbereich des entsprechenden Kerns (30) angeordnet ist.

9. Spritzgussmaschine, **dadurch gekennzeichnet, dass** sie eine Form nach einem der Ansprüche 1 bis 8 umfasst.

## Claims

1. Tandem mould for creating injection moulded parts from synthetic material comprising a first portion (2), a second portion (4) and a third portion (6), as well as guide means (20, 22, 26, 28) allowing for a relative displacement of the first portion (2) with respect to the third portion (6) and a relative displacement between the second portion (4) and the third portion (6), a first parting surface being defined between the first portion (2) and the third portion (6) and a second parting surface being defined between the second portion (4) and the third portion (6), the mould being able to take, on the one hand, a so-called open position wherein the first parting surface and the second parting surface are open, i.e. the corresponding portions of the mould are spaced from one another, and, on the other hand, a so-called closed position wherein the first parting surface and the second parting surface are closed, i.e. the corresponding portions of the mould come into contact with one another,
**characterised in that** it comprises for each parting surface at least one mechanical stop (44; 50; 62) movable between a first position, or active position, wherein said stop prevents the mould from reaching its closed position by defining a predetermined spacing for each parting surface between the corresponding portions of the mould and a second position, or retracted position, wherein the mould can reach its closed position.

2. Mould according to claim 1, **characterised in that** a stop is formed by a cylinder (40) arranged between two portions of the mould.

3. Mould according to claim 2, **characterised in that** each parting surface comprises at least two cylinders (40) forming a stop.

4. Mould according to claim 1, **characterised in that** a stop is formed by a screw (50) cooperating with a nut (56), motorised means being provided in order to allow for a relative translation between the screw (50) and the nut (56).

5. Mould according to claim 4, **characterised in that** it comprises:
- a first screw (50) engaged in a first nut (56) between the first portion (2) of the mould and the third portion (6) of the mould,
- a second screw (50) engaged in a second nut (56) between the second portion (4) of the mould and the third portion (6) of the mould, the second screw (50) being in the extension of the first (50) and having a reversed threading with respect to that of the first screw (50),
the first nut (56) and the second nut (56) being integral and driven in rotation by the same motor (M).

6. Mould according to claim 1, **characterised in that** a stop is present in the form of a movable corner (62), **in that** the stop is arranged facing a complementary fixed corner (60), the stop (62) and the fixed corner (60) forming a shim that has two parallel faces more or less spaced apart according to the relative position of the movable corner (62) in relation to the fixed corner (60).

7. Mould according to claim 6, **characterised in that** to each movable corner (62) is associated a cylinder (64) arranged transversally in relation to the direction of displacement of the movable portions (4, 6) of the mould.

8. Mould according to claim 1, **characterised in that** the first portion (2), the second portion (4) and the third portion (6) carry mould stackings, each stacking comprising a core (30) mounted on a portion (6) and a cavity (32) mounted on a portion (2, 4) facing the portion (6) carrying the corresponding core (30), and **in that** at least one mechanical stop is arranged each time on a mould stacking between a peripheral zone of the cavity (32) and a peripheral zone of the corresponding core (30).

9. Machine for injection moulding, **characterised in that** it comprises a mould according to one of claims 1 to 8.
